# EUROPEAN PATENT APPLICATION

(11) **EP 3 913 485 A1**
(43) Date of publication of application: **24.11.2021**
(21) Application number: 20175841.4
(22) Date of filing: 20.05.2020
(51) Int. Cl.: G06F 9/54, G06F 21/60, G06Q 10/06, H04L 9/08

(54) **METHOD AND COMPUTING PLATFORM FOR CONTROLLING THE SHARING OF DATA STREAMS EXCHANGED BETWEEN MULTIPLE ORGANISATIONS**

(71) Applicant: Cleverdist SA, 1228 Plan-les-Ouates (CH)
(72) Inventor: Gomez-Reino, Robert, 1279 Bogis Bossey (CH); Migeon, Paul-André, 1233 Bernex (CH)
(74) Representative: P&TS SA (AG, Ltd.)

(57) **Abstract**

A method for controlling the sharing of data streams exchanged between organisations, comprising:
providing at least one first organisation (3A), one second organisation (3B), and a third organisation (3C) each with a computing platform (5A; 5B; 5C) executing at least one software module;
generating at least one data stream in the first organisation;
using said software module in the first computing platform for sharing said first data stream to said third organisation through the at least one second organisation;
wherein a first sharing attribute is assigned by the first software module to each data in said data stream,
wherein the data stream is modified in at least one second computing platform;
wherein a second sharing attribute is assigned by a second software module in the second computing platform to said data stream, in complement to the first sharing attribute,
wherein the sharing right applied by a third said software module in the third computing platform depends on a logical combination of the first sharing attribute and second sharing attribute;
wherein the second software module does not allow modification of the first sharing attribute, and wherein the third software module does not allow modification of the first sharing attribute and of the second sharing attribute.

## Description

### Technical domain

The present invention concerns a data stream administration method in multi-enterprise technical environment, and a data stream administration system for implementing such a method. More precisely the present invention concerns a method for controlling the sharing of data streams exchanged between several organisations. Also, the present invention concerns a computing platform for the exchange or processing of data streams, that can be used for implementing the method according to the present invention.

In today's technological environment, some part of the activity of enterprises or any other public or private entities, hereby more generally referenced to "organisations", require the use of data streams in order to implement processes, to have machines and devices working normally, notably through a continuous exchange of data in order to perform calculation, predictions, simulations, to take decisions, to change parameters or settings of a machine, or to fulfil any other task required in a technological environment.

Those processes could present a great variety of forms, including but not limited to those intervening in all levels of industrial automation in industry 4.0. On a larger scale, the processes can be those implied in the manufacturing production and Industrial automation systems. For instance, those processes can be those controlling and monitoring the automation processes, those managing the machines and field level devices, the processes running in a computer system to collect and integrate data and data streams from automation machine controls within a production unit, the running of software tools used to track other manufacturing processes, or used to organize and compile company (or entity or organisation) data.

Also, the related machines or devices could be different kinds of equipment ranging from IIOT (Industrial Internet of Things), namely sensors, instruments, and other devices networked together with computers' industrial applications, including manufacturing and energy management to field instruments, field level devices, machine controllers (human machine interface (HMI), programmable logic controllers (PLCs), I/O devices, and servomechanisms), robots, remote-controlled systems, automated machines, microprocessors, computer systems, supervisory control and data acquisition (SCADA), manufacturing execution systems (MES), Enterprise Resource Planning (ERP), other IT systems and databases. This implies the necessity of compatibility of data along the chain of use of these data, and, in particular, between successive users/organisations which receive and treat those data one after another.

The data that are collected and exchanged may include individual pieces of data, transmitted as data streams, i.e., sequences of data that are collected, transferred and processed continuously with any possible interval of time between one piece of data and the following piece of data forming the data stream. This interval of time may be predetermined, as a fixed interval of time, or could be a variable or irregular interval of time. In the context of the present invention, a data stream can for example be formed of sequences of data generated, transferred and processed every millisecond, every second, every minute, every hour, every day, every week, every month, every semester, every year. In other situations, the interval of time is not predetermined, for instance when the generation of the next new data of the data stream is not time based but triggered by another event, such as a variation of value for example, eg a variation of a physical value or a variation of value of any (part of) cyber-physical system. Such a situation may correspond to the generation of the next piece of data if the lastly generated data is a value that has sufficiently changed : the parameter considered to generate data has a new numerical value with at least a difference of x (more or less than x) with respect to the previous value collected as data, or a new numerical value which is more (or less) than x% than the previous value collected as data in the data stream.

In the present text, the expressions "data", "piece of data" or "data of the data stream" are indifferently used and can encompass a single piece of data (datum), or a set of data such as a message, a data packet, a file or any sequence of data representing an information.

The pieces of data forming a data stream can represent a great variety of information, including but not limited to physical values measured by sensors, such as temperature, vibration, flow, level, pressure, angle, strain, comparison results, the information of activity or inactivity of a machine or a module, a state of an activity (in the context of a business, namely within a coherent set of industrial, commercial, financial or agricultural activities, carried out by an individual or a company for its own account or for the account of others) or a state of a control process represented by a logical value, etc.

Data streams are usually encoded in digital form and transmitted over digital communication networks, such as without restriction Internet.

Also, those organisations could be of different types, including enterprises of any types, from large size companies with any number of subsidiaries, affiliates and/or branches, SMEs such as one-man business, non-profit organisations, universities, and so on, and any department or unit of a company, such as a production line, an industrial processing unit, or on a lower scale a machine, an automated system, or another tool mixing software and hardware..

The exchange of data among several systems in a business to business model of activities raises safety and privacy problems including the following ones: the origin and the content of the data should be certified, in a large number of situations, the content of the data should not be modified, or if modified the content and the origin of change(s) should be determined and readable. Such markings of data or tagging are difficult to guarantee when the data are transferred along a chain of operations and operators that could be a long chain of multiple operators or a chain of operators using different types of systems (or machines or devices) for the treatment of those data in the course of the activity of these operators. Those concerns are even bigger and much more complex when the data in question are not isolated data but are transmitted as data streams.

### Related art

Document US2017177900 discloses a system and method for managing collaborative electronic data that is owned by two different users who belong to different organizations. Both users are also granted ownership rights of collaborative electronic data created by the users. Users then contribute to the collaborative electronic data by providing information that may be confidential to their organization. The users want to ensure that they can cut off access to the confidential information if and when the relationship between the users or organizations sours. This does not concern data streams flowing along a chain of users.

Documents US2020057980, US2020012765, WO19106186 or US2019173854, WO19108168 concern systems tracking data ownership through blockchains for different kinds of multimedia files having embedded metadata. In most of these solutions, ownership and user rights are updatable. Document US2015379294 discloses systems for tracking sharing rights of collaborative documents. Document US2016041972 discloses a document management system, registers, in which a document may be owned by different owners. Ownership is tracked and registered. None of these documents concern a system relating to the traceability of data ownership between different enterprises for cyber-physical systems. These systems do not relate to traceability of data streams along a chain of users.

Also, document US2014047560 concern collaborative working of different companies sharing common resources. However, this does not provide a solution to track ownership of information for cyber-physical systems, nor to provide to traceability of data streams along a chain of users.

### Short disclosure of the invention

An aim of the present invention is the provision of a method and a system that overcomes the shortcomings and limitations of the state of the art.

Another aim of the invention is to provide a method and a system able to control the sharing of each piece of data in a data stream generated with a cyber-physical system in a first organisation and exchanged afterwards with at least two other different organisations.

Another aim of the invention is to provide a method and a system for controlling the sharing rights of each piece of data contained in at least one data stream, in particular for a data stream generated or coming from an originator (first organisation with a data stream source) and passing through successive contributors (second organisation and third organisation and possibly further organisation(s)).

According to the invention, these aims are attained by the object of the attached claims, and especially with a method for controlling the sharing of data streams exchanged between multiple organisations, comprising:
providing at least one first organisation, one second organisation, and a third organisation each with a computing platform executing a software module;
generating at least one data stream in the first organisation,
using said software module for sharing said first data stream in encrypted and signed form to said third organisation through the at least one second organisation;
wherein a first sharing attribute is assigned in the first software module to each data in said data stream,
wherein the data stream is modified in at least one second computing platform;
wherein a second sharing attribute is assigned in the second computing platform to each data in said data stream, in complement to the first sharing attribute,
wherein the sharing right applied by the third software module depends on a logical combination of the first and second sharing attribute;
wherein the second software module does not allow modification of the first sharing attribute, and wherein the third software module does not allow modification of the first sharing attribute and of the second sharing attribute.

In the present application, a computing platform is a combination between hardware and software components. The hardware components may include without limitations a computer, a server, a virtual server, a network of servers, etc. The software components can comprise an operating system, and one or a plurality of software modules.

A computing platform can execute a software module in order to perform the various steps of the invention. The software module can comprise one or a plurality of software applications, for example one application for collecting data stream, one different application for encrypting and signing the data stream, a third application for sharing a data stream, and so on.

An organisation may be a company, a branch in a company, an administration, or any economical or industrial entity, or any department or unit of a company, such as a production line, an industrial processing unit, or on a lower scale a machine, an automated system, or another tool mixing software and hardware. An organisation can operate one or a plurality of computing domains, and a plurality of users authorised to access each computing domain. An organisation can also operate one or a plurality of computing platforms within the same domain or within different domains. Each computing platform may execute one or a plurality of software modules as previously defined. Different software modules executed on different computing platforms may belong to different domains and/or may be associated with different sharing and access rights. An administrator in the authorisation defines which user has a right to access each software module and therefore each piece or stream of data.

A data stream is a sequence of digital data, in particular a sequence of technical data, used to convey or receive information. In an industrial environment, data streams may be generated by sensors, or by machines, devices (e.g. valve, pump, a circuit breaker, etc.). For example, data streams may be generated by sensors that continuously or periodically measure physical parameters, including IOT devices (Internet of things sensors) robots, remote-controlled systems, automated machines. Data streams may also be produced for example by an ERP (Enterprise Resource planning) software that receive, process and combine administrative and technical data. Data streams are generally transmitted as encoded coherent signals, often in the form of packets of data.

With respect to the prior art, the invention provides the advantage that it allows a data stream flowing in a multi-organisation and technical environment to be administrated with traceability along its route between the successive organisations and corresponding computing platforms. In some embodiments of the invention, data protection is also reinforced. For example, in some embodiments, pieces of data in a data stream cannot be shared outside of the authorized software module in a computing platform.

The sharing right assigned to each data stream defines if and how a recipient of a data stream can share this data stream. For example, each sharing right might be selected among a list comprising at least:
- no right to reshare;
- limited right to reshare;
- unlimited right to reshare.

A sharing right might be restricted to a recipient or class of recipient. For example, a first class of recipient might be authorised to reshare a data stream while another class of recipient might be forbidden to reshare the same data stream.

A sharing right might be restricted to a time window. For example, a sharing right might define that a data stream can be shared during a first time window, and cannot be shared during a second time window

Each sharing right is encoded with a corresponding sharing attribute, such as a binary value, a byte, a string, a file such as an XML file, etc.

In the context of the invention, one data stream only or more than one data stream (namely several data streams) can flow between a first organisation and a second organisation, and/or between a second organisation and a third organisation. When several data streams are flowing between two organisations, the sharing rights of these data streams might be different for the different data streams.

In addition to the sharing right, each data stream may be associated with one access right or a plurality of access rights. Different users and different platforms might have different access rights to a particular data stream.

The access rights may be chosen among a list comprising at least:
- read only;
- read and write.

Preferably, an access right is assigned in at least one of said first, second and third computing platforms by said software module to said data stream. For instance, the first computing platform assigns a first access right to each data in a data stream, through a first access attribute which represents this first access right. Alternatively or in addition to the preceding provision, the second computing platform assigns a second access right to each data of the data stream, through a second access attribute which represents this second access right. Alternatively or in addition to the preceding provision, the third computing platform assigns a third access right to each data of the data stream, through a third access attribute which represents this third access right.

In an embodiment, each piece of data in a data stream has the same sharing right. It is thus sufficient to determine a sharing right associated with one data stream in order to assign to each data in that stream the corresponding sharing right. This same sharing right of each piece of data in a data stream can be unchanged all along the travel of the data stream flow between several organisations or can be changed after the passing of the data stream through one organisation of the successive organisations.

In another embodiment, individual pieces of data in a data stream has different sharing rights. In a possible implementation, a first sequence of individual pieces of data present in a data stream at a first moment is assigned a sharing attribute and a second sequence of individual pieces of data, which is present in said data stream at another moment different from the first moment, is assigned another different sharing attribute. For instance the sharing rights of the pieces of data of a given data stream are represented by a first sharing attribute during a first period of time and afterwards, from the end of the first period of time, the pieces of data of this given data stream are represented by a second sharing attribute which is different from the first sharing attribute and which represent another sharing right than the sharing right used for the first period of time. This scenario might for instance occurs when a first organisation delivers a data stream to a second organisation which initially does not change the content of this data stream before delivering this data stream to a third organisation (the first sharing attribute and second sharing attribute assigned to each piece of data are identical), but at some moment the second organisation modifies the data of the data stream coming from the first organisation and also assign to each piece of data a second attribute which is different from the first attribute. In that specific situation, it corresponds to individual pieces of data in a data stream which have different sharing rights depending on the considered period of time, which means depending on the considered sequence of data or considered sequences of data forming the data stream. It means that within the same organisation the sharing right assigned to a piece of data might change dynamically over the time for the same data stream.

According to an embodiment of the invention, each piece of data in a data stream is assigned a contribution attribute representative of the organisation(s) at the origin of the generation (or production) of that piece of data and, if any, of the organisation(s) at the origin of the modification of that piece of data.

The organisation(s) at the origin of the generation (or production) of a data, or which modifies this data, is called a contributor. A single piece of data, or a single data stream, may have one or several contributors, for example if one data generated by a first contributor is modified or completed by a second contributor.

The labelling of contributors assigned to a piece of data is preferably fixed, i.e., it cannot be removed, hidden or modified. This labelling is represented with a contribution attribute.

According to an embodiment, a limited life duration is assigned to at least one piece of data in said data stream, so that a software module cannot access this piece of data after said life duration.

According to an embodiment, data streams are shared between computing platforms only and processed within said computing platforms only. It is thus not possible to export a data stream or a portion of a data stream outside said computing platforms.

The software modules executed by the computing platforms are preferably proprietary systems, i.e., based on software programs which are only distributed in encoded, compiled form. The code source of this programs is not available to the public, except for developers of the modules. Therefore, a user of the platform or a third party cannot easily reprogram a software module in order to manipulate the sharing right associated with a data stream, nor easily access, exploit or manipulate a data stream except through the functionalities provided by a proprietary software platform executed on an authorized computing platform.

According to an embodiment, data streams may be produced by cyber-physical systems, i.e. a system that measures or otherwise accesses physical data and manipulates them in digital form. The cyber-physical system, as data source, can be an IOT system (Internet of things), such as an IIOT system (Industrial Internet of things), or a more complex system that combines sensors with a software for manipulating and retrieving the data measured, such as an ERP (Enterprise Resource Planning) software. For instance, examples of cyber-physical system may be used in smart grids, autonomous automobile systems, medical monitoring, industrial control systems, robotics systems, and automatic pilot avionics... Cyber-physical systems can also for example be a MES (manufacturing execution system), a IT-OT integrated operating system, a PLC (programmable logic controller), a system for Automation, a Database repository, a HMI (human machine interface), a SCADA (supervisory control and data acquisition) and/or a DCS (distributed control system). Cyber-physical systems present a high combination and coordination between physical elements and computational elements. In cyber-physical systems, the physical elements and computational elements are able to operate on different spatial and temporal scales, exhibit multiple and distinct behavioral modalities, and interact with each other in ways that change with context. Cyber-physical systems may typically be designed as networks of interacting physical elements with physical input and physical output instead of as standalone devices. More generally, said data stream is generated by a data stream source.

According to an embodiment, the data streams (and/or each piece of data within such a stream) are signed and encrypted when sent by a computing platform and decrypted when received by another computing platform. Such an arrangement guarantees that within a computing platform, the data stream entering the computing platform (which is either an original/initial data stream generated by the initial data source in the first platform or an already used and/or modified data stream coming from a second, third of further computing platform) can be read by a receiving computing platform after their reception, and possibly modified, i.e. treated (for instance completed with another value or another set of values coming from another data source, used for a calculation, used for comparison with another value or another set of values possibly coming from another data source......). Also this arrangement guarantees that after use in the computing platform, namely at the output of the computing platform, the data stream is again encrypted so that the pieces of data of the data stream are protected outside the platforms, including between two successive computing platforms (for instance between the second platform and the third platform).

The present invention also concerns a computing platform for the exchange or processing of data streams, comprising a software module including:
a data stream receiving module arranged for receiving at least one encrypted and signed data stream from another computing platform, a first sharing attribute being assigned to said data stream (first sharing attribute, namely originate sharing attribute, or preceding sharing attribute, namely upstream sharing attribute assigned to each data in the data stream in a computing platform placed directly upstream of the considered computing platform);
a cryptographic module for verifying a signature associated with said data stream and for decrypting said data stream;
a right assignment module for assigning a second sharing attribute to each data in said data stream (second sharing attribute or contributive sharing attribute or consecutive sharing attribute or downstream sharing attribute assigned to the data stream in the considered computing platform);
a data stream forwarding module for forwarding said data stream in encrypted and signed form to another computing platform (namely a computing platform placed directly downstream of the considered computing platform), said first sharing attribute and said second sharing attribute being assigned to each data in the forwarded data stream.

Such computing platform may encompass several possible implementations, including but not limited to one of the three following types: a multi-site platform, a distributed platform, a cloud-based platform, or a hybrid platform between these three preceding mentioned types.

Depending on the embodiment, such computing platform may comprise one or several provisions among the following ones:
- said first sharing attribute and said second sharing attribute respectively represent a first sharing right and a second sharing right, said first sharing right and said second sharing right being chosen among a list comprising at least no right to reshare, limited right to reshare and unlimited right to reshare;
- said software module is able to assign an access right to said data stream, said access right being chosen among a list comprising at least read only and read and write;
- said data stream is composed of a plurality of individual pieces of data, wherein the first sharing attribute and second sharing attribute assigned to each said piece of data are identical;
- said right assignment module is able to assign at a first moment a sharing attribute to a first sequence of individual pieces of data present in said data stream and is able to assign another different sharing attribute to a second sequence of individual pieces of data, which is present in said data stream at another moment different from the first moment;
- said data stream is produced by a cyberphysical system, such as for example a MES (manufacturing execution system), a IT-OT integrated operating system, a PLC (programmable logic controller), a system for Automation, a Database repository, a HMI (human machine interface), a SCADA (supervisory control and data acquisition), a DCS (distributed control system), an ERP (Enterprise Resource Planning)), a robot, a remote-controlled system, an automated machine and/or an IOT system;
- said software module is able to assign, to the piece of data of said data stream, a contribution attribute representative of the organisation(s) operating said computing platform if this (these) organisation(s) is (are) at the origin of the generation and/or of the modification of the piece of data;
- a limited life duration is assigned by the computing platform to at least one piece of data in said data stream, so that the software module prevents access to this piece of data after said life duration;
- said data stream is shared between software modules in computing platforms only;and/or
- said computing platform is able to send a signed and encrypted data stream, and said computing platform is able to receive a decrypted data stream from another computing platform.

### Short description of the drawings

Exemplar embodiments of the invention are disclosed in the description and illustrated by the drawings in which:
Figure 1 is a bloc schema of a system for controlling the sharing of data streams exchanged between three organisations,
Figure 2 illustrate schematically a possible arrangement of a computing platform of the present invention, which can be used in each organisation,
Figure 3 is a flowchart of a possible embodiment of the steps undergone by a data stream in the platform of a first organisation, and
Figure 4 is a flowchart of a possible embodiment of the steps undergone in the platform of a second organisation by a data stream that may be delivered as output of the platform of a first organisation, before the data stream is received by the platform of a third organisation.

### Examples of embodiments of the present invention

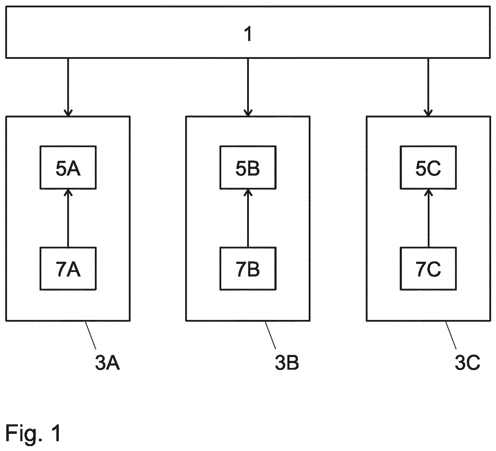

With reference to Figure 1, three organisations 3A, 3B and 3C are involved in the process of sharing a data stream which is exchanged successively between these three organisations 3A, 3B and 3C. Each organisations 3A, 3B and 3C may also complete the data stream with additional data generated by a data stream source, and thus be considered as a contributor of that data stream.

The first organisation 3A comprises a first computing platform 5A with at least one software module arranged for receiving or generating an initial data stream from at least one data stream source 7A, such as a cyber-physical system, for example an IOT device, for instance an IIOT device. The second organisation 3B comprises a second computing platform 5B with at least one software module arranged for receiving or generating another data stream from at least one data stream source 7B, this additional data stream being intended to be combined with the initial data stream coming upstream from the first organisation 3B, forming thereby a modified data stream going outside downstream the second organisation 3B. In parallel, the third organisation 3C comprises a third computing platform 5C with at least one software module arranged for receiving or generating another data stream from at least one data stream source 7C, this additional data stream being intended to be combined to the modified data stream coming upstream from the third organisation 3C, forming thereby a further modified data stream going outside downstream the third organisation 3C. Each software module comprises proprietary software and cannot be easily rewritten or modified by non-authorised users. Each software module may comprise one or a plurality of software applications.

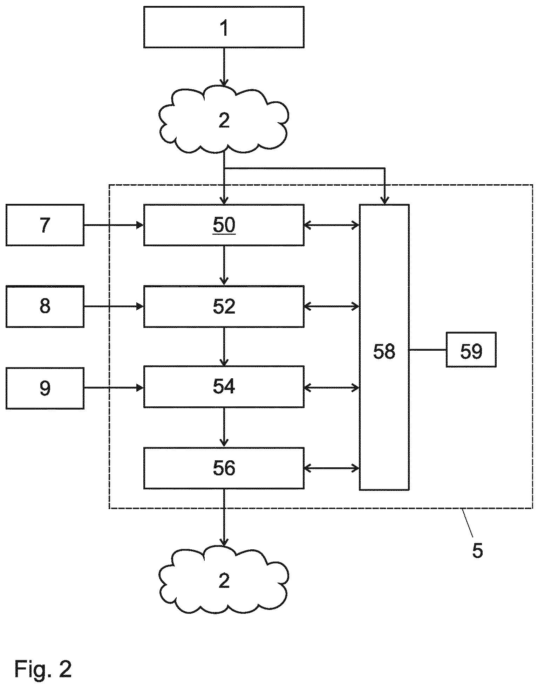

As can be seen in Figures 1 and 2, an administration platform 1 communicates with the first, second and third computing platforms 3A, 3B, 3C through a communication network, to control the sharing of the data stream (or of several data streams) between these three computing platforms 3A, 3B, 3C. To that end, as explained in more details below, the administration platform 1 generates and provides the software modules within the computing platforms 3A, 3B, 3C with encryption and signature keys that permits the software modules to sign, verify the signatures, encrypt and decrypt the data of the data stream, which data are exchanged between different software modules in one or a plurality of computing platforms.

The administration platform 1 also comprises a repository from which the software modules (which are not modifiable), can be downloaded and updated.

A possible architecture of the computing platforms 5A, 5B and 5C is shown in more details in Figure 2. The computing platform 5 may comprise a software module with the following components::
- a data stream receiving module 50 which forms the inlet of the software module in a computing platform 5; the data stream receiving module 50 is connected to the communication network 2 for communication with the other platforms so that the data stream receiving module 50 receives the data stream coming from upstream platforms, if any; the data stream receiving module 50 is also connected to the data stream source 7 for reception (if any) of new data to be put in the received data stream to possibly form a modified data stream; the data stream receiving module 50 is also connected to a user interface 58 for user control and information about the content of the data stream,
- a cryptographic module 52 connected to the data stream receiving module 50 and which performs the decryption of the data of the data stream, using the cryptographic key contained in the encryption key support 8, and which further afterwards realises the encryption of the modified sequences of data forming the modified data stream, forming thereby an encrypted modified sequences of data; to that end, the cryptographic module 52 is also connected to a user interface 58 for user command and control of the cryptographic module 52,
- a right assignment module 54 connected to the cryptographic module 52 for reception from the cryptographic module 52 of the encrypted data stream, and assignment of a sharing attribute and an access attribute, forming thereby a signed and encrypted modified data stream; to that end, the right assignment module 54 is connected to the memory 9 and to the user interface 58 for user command and control of the right assignment module 54,
- a forwarding module 56 connected to the right assignment module 54 for reception from the right assignment module 54 of the signed and encrypted modified data stream, and for downstream transmission of that signed and encrypted modified sequences of data, namely of that data stream, via the communication network 2, to another recipient, for instance to another platform,
- a user interface 58 already presented, and
- a display 59 connected to the user interface 58.

These modules 50, 52, 54, 56, the user interface 58 and the display 59 can be coupled by means of a data bus system shown by arrows in Figure 2. Preferably, this data bus system also couples the data source 7 to the data stream receiving module 50. Preferably, this data bus system also couples the encryption key support 8 to the cryptographic module 52. Preferably, this data bus system also couples the memory 9 to the right assignment module 54. The encryption key support 8 comprises for example a memory or any other suitable non-volatile storage device or persistent storage.

Each sharing attribute may be selected from a list of sharing attributes. The sharing attributes may be defined automatically or proposed to a user through the user interface 58 via the display 59. For instance, a sharing attribute representing the absence of sharing the data stream (no right to share) may be represented by a value 0 (or a first digital value), whereas the sharing attribute representing the full right of sharing the data stream (unlimited right to share) may be represented with another digital value (a second digital value). In addition, one more possible sharing attribute representing might be proposed and represented with one more different digital value (a third digital value).

In a similar way, the assignment of access attributes (representing access rights) in the right assignment module 54 uses access attributes selected from a list of access attributes. The access attributes may be defined automatically, and/or proposed by the user interface 58 via the display 59.

When the data stream flows along the platforms of implied organisations, including the first platform 5A, the second platform 5B and the third platform 5C, each data stream is subject to transformation in each platform through which it passes. This transformation results in modified data streams. The transformation may comprise for example: completing a data stream with additional data for instance by concatenation (this operation allows data streams to be linked together to form a single data stream), changing the data through calculation(s) or other logical operation(s) such as comparison to reference value(s) or threshold(s), ...

The sharing right assigned to a data in the data stream having transited through a plurality of software modules in one or a plurality of computing platforms in one or a plurality of organization results from a logical combination between the different sharing rights assigned by those different software modules. In one example, the resulting sharing right is the most restrictive sharing right assigned to the stream by the successive software modules. For example, if a first contributor of the data stream assigns a permissive sharing right to the data stream and shares it with a second contributor in a second platform who reshares the data stream (or a modified data stream) with a more restrictive sharing right, a third platform that receives this reshared data stream will apply the restrictive sharing right.

The logical combination between different sharing rights may be performed by the user of the corresponding data stream. In that case, a recipient will receive a data stream with all sharing rights assigned to that data stream by previous software modules upstream, and compute an aggregated sharing right.

In a preferred embodiment, the logical combination between different sharing rights is performed by the software module which reshares a data stream with a new sharing right. In that case, a software module will receive a data stream with an existing sharing right determined by one or a plurality of software modules upstream, aggregates that existing sharing right with an additional sharing right, and reshare the data stream with the aggregated sharing right.

For example, a first computing platform may provide a stream of raw physical data from one sensor and assign an unlimited sharing right to each data of that data stream. This "unlimited sharing right" means that it is possible to export a data stream or a portion of a data stream outside the considered (first) computing platform. The data stream is then forwarded to a second computing platform which completes it with additional data and assigns a more limited sharing right to the data of the resulting aggregated data stream, before forwarding this aggregated data stream to a third computing platform. The third computing platform can then only share the aggregated data stream according to the more restrictive right defined by the software module of the second computing platform. More generally, the sharing right assigned to a sequence of data by the software module in a current platform depends on a logical combination of the sharing attribute of the upstream platform and of the sharing attribute of the current platform.

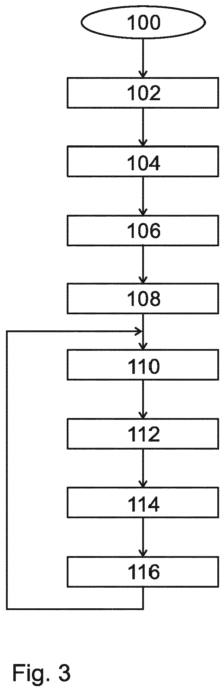

Figure 3 illustrates the generation, initial treatment and further different treatment steps of a data stream generated in a first organisation 3A. In step 100, the treatment starts, then (step 102) a first computing platform 5A is provided, a first data stream source 7A is defined (step 104). The software module of the first computing platform 5A then assigns to each data of the data stream generated by that data stream source both a first sharing attribute (step 106) representing a first sharing right and a first access attribute (step 108) representing a first access right. The software module may also assign a contributor to that data stream, i.e., an identification of the originating data stream. At step 110, the sequence of data generated by this data stream source is received by the data stream receiving module 50 in the first computing platform 5A and then encrypted and signed (steps 112 and 114) by the cryptographic module 52 using the encryption key and signature. The encrypted and signed sequence of data is then sent downstream as an encrypted and signed data stream from the first organisation 3A up to a second organisation 3B placed downstream the first organisation 3A (step 116). This treatment of step 110 to step 116 is iteratively repeated.
In an alternative embodiment which is not represented in the figures, after step 116, instead of another loop starting again with another step 110, the treatment of the next sequence of data of the data stream corresponds to step 106 to step 116: it occurs if each data of the next sequence of data of the data stream, which is generated by that data stream source, is assigned a first sharing attribute which is different than the first sharing attribute assigned to the previous data sequence. In that situation and according to a first possibility, in step 108, the first access right of each data of the next sequence of data of the data stream, might be the same than the first access right of each data of the previous sequence of data of the data stream. In that situation and according to a second possibility, in step 108, the first access right of each data of the next sequence of data of the data stream, might be not the same than the first access attribute of each data of the previous sequence of data of the data stream due to a change of access right assigned by the software module of the first computing platform 5A.
In another alternative embodiment which is not represented in the figures, after step 116, instead of another loop starting again with another step 110, the treatment of the next sequence of data of the data stream corresponds to step 108 to step 116: it occurs notably if each data of the next sequence of data of the data stream, which is generated by that data stream source, is assigned the same first sharing attribute as the first sharing attribute assigned to the previous data sequence, and if the first access right of each data of the next sequence of data of the data stream, is not the same (is different) than the first access attribute of each data of the previous sequence of data of the data stream due to a change of access attribute assigned by the software module of the first computing platform 5A.

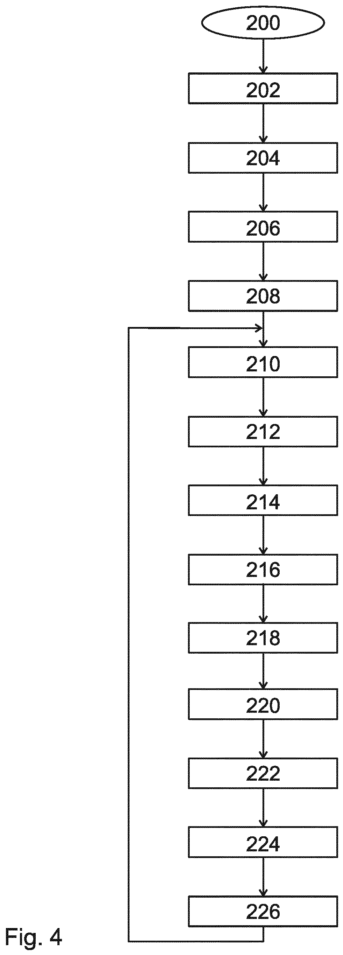

Figure 4 illustrates different steps of the processing of an initial data stream arriving from this first organisation 3A into a second organisation 3B placed downstream to the first organisation 3A. At step 200, the treatment starts, then (step 202) a second computing platform 5B with a second software module is provided. A second data stream source is defined (step 204). The software module of the second computing platform 5B defines then a second sharing attribute (step 206) representing a second sharing right and, optionally, a second access attribute (step 208) representing a second access right. A second contributor may also be defined. At step 210, the data stream receiving module 50 in the second computing platform 5B receives the encrypted and signed sequence of data arriving from the first computing platform 5A. This encrypted and signed data stream is decrypted (step 212) and its signature is checked (step 214) by the cryptographic module 52 of the second computing platform 5B. In the following step 216, the processable sequence of data of the data stream is processed (namely used, exploited, for instance displayed and/or modified as explained above) and/or completed in the second computing platform 5B, possibly using the additional data sequence generated by the second data stream source 7B, to form a modified data stream. The previously defined sharing and access rights are aggregated with the sharing rights and respectively access rights previously assigned to the received data stream, and the aggregated sharing and/or access rights are assigned to each data of the data stream at steps 216, respectively 218. An additional contributor may be assigned to the data stream. The modified data stream is then encrypted and signed (steps 222 and 224) by the cryptographic module 52, using the encryption key and signature of the second software module, forming thereby an encrypted and signed modified data stream.

The encrypted and signed modified data stream is then sent from the second organisation 3B to a third organisation 3C downstream the second organisation 3B. This treatment of step 210 to step 216 is iteratively repeated.
In an alternative embodiment which is not represented in the figures, after step 216, instead of another loop starting again with another step 210, the treatment of the next sequence of data of the data stream corresponds to step 206 to step 216: it occurs if each data of the next sequence of data of the data stream, which is generated by that data stream source, is assigned a second sharing attribute which is different than the second sharing attribute assigned to the previous data sequence. In that situation and according to a first possibility, in step 208, the second access attribute of each data of the next sequence of data of the data stream, might be the same than the second access right of each data of the previous sequence of data of the data stream. In that situation and according to a second possibility, in step 208, the second access right of each data of the next sequence of data of the data stream, might be not the same than the second access right of each data of the previous sequence of data of the data stream due to a change of access attribute assigned by the software module of the second computing platform 5A.
In another alternative embodiment which is not represented in the figures, after step 216, instead of another loop starting again with another step 210, the treatment of the next sequence of data of the data stream corresponds to step 208 to step 216: it occurs notably if each data of the next sequence of data of the data stream, which is generated by that data stream source, is assigned the same second sharing attribute as the second sharing attribute assigned to the previous data sequence, and if the second access right of each data of the next sequence of data of the data stream, is not the same (is different) than the second access right of each data of the previous sequence of data of the data stream due to a change of access at tribute assigned by the software module of the second computing platform 5B.

According to an embodiment, this second organisation 3B comprises a software module in the second computing platform 5B that cannot ignore the first sharing attribute or assign a less restrictive sharing right.

In the third organisation 3C downstream of the second organisation 3B, the data stream arriving from this second organisation 3B is available for steps analogous to steps 200 to 226 previously described for the second organisation 3B. According to the invention, this third organisation 3C comprises a third computing platform 5C that cannot ignore the aggregated sharing right and aggregated access right assigned to the received modified data stream.

As a non-limitative example, according to a possible application in the medical field, the first organisation may be a medical laboratory with the first data source a sensor in a laboratory analysis system which measures biological and medical parameters of a biological sample, which parameters forms the initial sequence of data of the data stream corresponding to biological results of a specific patient. In that example, the second organisation may be an hospital, with an ERP as second data source, and which receives the initial sequence of data, thereby knowing the patient's details, including the details of the doctor of that patient and the sharing right and access right attached to that doctor, which complete the initial sequence of data to form a modified sequence of data in the data stream. If the third organisation corresponds to that doctor's office, the corresponding doctor's computing platform can receive the modified sequence of data, for instance the possibility to read only (sharing right) and only for one week (access right) the biological results (biological and medical parameters of the biological sample) of the specific patient as measured by the laboratory analysis system of the medical laboratory.

In another possible application in industrial field, the invention can be used for different organisations implied for controlling the security of an industrial plant or of a nuclear power plant.

According to another example related to the field of manufacturing. One machine maker (first organisation A) produces machines for a range of customers (at least second organisation B and third organisation C). To offer remote services at each customer site, this Machine maker installs a software module in a computing platform present on the machines that are installed at the customers' sites, namely at least at the second organisation B and at the third organisation C. Data streams are then transferred from the second organisation B to the first organisation A, and conversely from the first organisation A to the second organisation B to provide remote assistance. In parallel, operating data are transferred via data streams from the second organisation B and the third organisation C towards the first organisation A according to exclusive sharing right. In a possible implementation, operating data from the second organisation B are never shared with the second organisation C, and vice versa operating data from the third organisation C are never shared with the third organisation B.

In parallel, according to a first scenario, the first organisation A aggregates other data generated from the first organisation A, the second organisation B and the third organisation C regarding e.g. billing information of material part replacement needs, where second organisation B and third organisation C give unlimited sharing rights for such data and more generally for administrative data. Having received these administrative data the first organisation A is then in a position to reorder parts automatically from their supplier through their ERP, and to directly update their customers (second organisation B and third organisation C) with delivery dates through the computing platform and its software module of the machine present at the customers' premises (at the second organisation B and at the third organisation C).

In parallel, according to a second scenario replacing the previously described first scenario, the first organisation A buys critical components for these machines from another vendor (fourth organisation D). Specific operating data related to that critical component are reshared with this fourth organisation D, who has planned maintenance program for this critical component. The modified data stream flowing by the first organisation A, after coming from the second organisation B and from the third organisation C towards the fourth organisation D (after treatment of the data stream(s) implying e.g. aggregation of some technical data, removing unneeded commercial data..) allows the fourth organisation D to provide planned maintenance to the first organisation A, who will include this maintenance service into their own list of services provided to the second organisation B and to the third organisation C.

### Additional Features and Terminology

Depending on the embodiment, certain acts, events, or functions of any of the algorithms described herein can be performed in a different sequence, can be added, merged, or left out altogether (for example, not all described acts or events are necessary for the practice of the methods). Moreover, in certain embodiments, acts or events can be performed concurrently, for instance, through multi-threaded processing, interrupt processing, or multiple processors or processor cores or on other parallel architectures, rather than sequentially. In addition, different tasks or processes can be performed by different machines or computing systems that can function together.

The various illustrative logical blocks, modules, machines, transducers and algorithm steps described herein can be implemented as electronic hardware, computer software, or combinations of both. To clearly illustrate this interchangeability of hardware and software, various illustrative components, blocks, modules, computing platforms, machines and steps have been described above generally in terms of their functionality. Whether such functionality is implemented as hardware or software depends upon the particular application and design constraints imposed on the overall system. The described functionality can be implemented in varying ways for each particular application, but such implementation decisions should not be interpreted as causing a departure from the scope of the disclosure.

A computing platform can be based on software and hardware components. The hardware components of the computing platform may be based on any type of computer system, including, but not limited to, a computer system based on a microprocessor, a mainframe computer, a digital signal processor, a portable computing device, a physical or virtual server, a cloud based server, a hybrid system comprising processing power in a server as well as additional processing power in the cloud, or a computational engine within an appliance, to name a few.

A software module can comprise one or a plurality of application software executed by a computing platform in order to collect, process, encrypt, sign, decrypt, reshare, and perform other operations on data streams.

The steps of a method, process, or algorithm described in connection with the embodiments disclosed herein can be embodied directly in hardware, in a software module stored in one or more memory devices and executed by one or more processors, or in a combination of the two. A software module can reside in RAM memory, flash memory, ROM memory, EPROM memory, EEPROM memory, registers, hard disk, a removable disk, a CD-ROM, or any other form of non-transitory computer-readable storage medium, media, or physical computer storage. An example storage medium can be coupled to the processor such that the processor can read information from, and write information to, the storage medium. In the alternative, the storage medium can be integral to the processor. The storage medium can be volatile or non-volatile.

Conditional language used herein, such as, among others, "can," "might," "may," "e.g.," and the like, unless specifically stated otherwise, or otherwise understood within the context as used, is generally intended to convey that certain embodiments include, while other embodiments do not include, certain features, units or states. Thus, such conditional language is not generally intended to imply that features, units or states are in any way required for one or more embodiments or that one or more embodiments necessarily include logic for deciding, with or without author input or prompting, whether these features, units or states are included or are to be performed in any particular embodiment. The terms "comprising," "including," "having," and the like are synonymous and are used inclusively, in an open-ended fashion, and do not exclude additional units, features, acts, operations, and so forth. Also, the term "or" is used in its inclusive sense (and not in its exclusive sense) so that when used, for example, to connect a list of units, the term "or" means one, some, or all of the units in the list. Further, the term "each," as used herein, in addition to having its ordinary meaning, can mean any subset of a set of units to which the term "each" is applied.

The present invention brings multiple benefits to the use of data streams between several organisations. Among others, the invention reinforces the data traceability and protection in a business to business model of activities where at least three organisations are implied, and more generally brings protection to a multi-enterprise environment. Also, the invention reduces the risk of leakage and also reduces the risk from consequent management happening between several organisations being partners when the mutual trust is loosening.

### List of references

- 1: Administration platform
- 2: Communication network, such as Internet
- 3: Organisation
- 5: Platform of an organisation
- 7: Data source (e.g. IOT sensor, ERP, DCS, SCADA, MES, PLM, robot..)
- 8: Encryption key support
- 9: Memory
- 50: Data stream receiving module
- 52: Cryptographic module
- 54: Right assignment module
- 56: Forwarding module
- 58: User interface
- 59: Display
- 100: Start
- 102: Providing a first computing platform
- 104: Defining a data stream source
- 106: Assigning first sharing rights embodied by first sharing attribute
- 108: Assigning first access rights embodied by first access attribute
- 110: Generating a data stream
- 112: Encrypting the data stream
- 114: Signing the data stream
- 116: Sending the data stream
- 200: Start
- 202: Providing a second computing platform
- 204: Defining a second source of data stream
- 206: Defining second sharing rights embodied by second sharing attributes
- 208: Defining second access rights embodied by second access attributes
- 210: Receiving data stream from first computing platform
- 212: Decrypting the data stream
- 214: Verifying signature
- 216: Processing/ Exploiting/Displaying data stream
- 218: Assigning additional sharing rights
- 220: Assigning additional access rights
- 222: Encrypting data stream
- 224: Signing data stream
- 226: Forwarding data stream

## Claims

1. A method for controlling the sharing of data streams exchanged between organisations, comprising:
providing at least one first organisation (3A), one second organisation (3B), and a third organisation (3C) each with a computing platform (5A; 5B; 5C) executing at least one software module;
generating at least one data stream in the first organisation;
using said software module in the first computing platform for sharing said first data stream to said third organisation through the at least one second organisation;
wherein a first sharing attribute is assigned by the first software module to each data in said data stream,
wherein the data stream is modified in at least one second computing platform;
wherein a second sharing attribute is assigned by a second software module in the second computing platform to each data in said data stream, in complement to the first sharing attribute,
wherein the sharing right applied by a third said software module in the third computing platform depends on a logical combination of the first sharing attribute and second sharing attribute;
wherein the second software module does not allow modification of the first sharing attribute, and wherein the third software module does not allow modification of the first sharing attribute and of the second sharing attribute.

2. The method of claim 1, said first sharing attribute and said second sharing attribute respectively represent a first sharing right and a second sharing right, said first sharing right and said second sharing right being chosen among a list comprising at least:
- no right to reshare;
- limited right to reshare;
- unlimited right to reshare.

3. The method of one of the claims 1 or 2, wherein an access right is assigned by one said software module in at least one of said first, second and third computing platforms to said data stream, said access right being chosen among a list comprising at least:
- read only;
- read and write.

4. The method of one of the claims 1 to 3, wherein said data stream is composed of a plurality of individual pieces of data, wherein the first sharing attribute and second sharing attribute assigned to each said piece of data are identical.

5. The method of one of the claims 1 to 4, wherein a first sequence of individual pieces of data present in said data stream at a first moment is assigned a sharing attribute and a second sequence of individual pieces of data, which is present in said data stream at another moment different from the first moment, is assigned another different sharing attribute.

6. The method of one of the claims 1 to 5, wherein a limited life duration is assigned to at least one piece of data in said data stream, so that the software module prevents access to this piece of data after said life duration.

7. The method of one of the claims 1 to 6, wherein said data stream is shared between said software modules in computing platforms only.

8. The method of one of the claims 1 to 7, said data stream being produced by a cyberphysical system, such as for example a MES (manufacturing execution system), a IT-OT integrated operating system, a PLC (programmable logic controller), a system for Automation, a Database repository, a HMI (human machine interface), a SCADA (supervisory control and data acquisition), a DCS (distributed control system), an ERP (Enterprise Resource Planning), a robot, a remote-controlled system, an automated machine and/or an IOT system.

9. The method of one of the claims 1 to 8, said data stream being signed and encrypted when sent by a computing platform, and decrypted when received by another computing platform.

10. The method of one of the claims 1 to 9, wherein each piece of data in a data stream is assigned a contribution attribute representative of the organisation(s) at the origin of the generation (or production) of the data and, if any, of the organisation(s) at the origin of the modification of the data.

11. A computing platform for the exchange or processing of data streams, comprising a software module including:
a data stream receiving module arranged for receiving at least one encrypted and signed data stream from another computing platform, a first sharing attribute being assigned to each data of said data stream by said software module;
a cryptographic module for verifying a signature associated with said data stream and for decrypting said data stream;
a right assignment module for assigning a second sharing attribute to each data of said data stream;
a data stream forwarding module for forwarding said data stream in encrypted and signed form to another computing platform, said first sharing attribute and said second sharing attribute being assigned to the forwarded data stream.

12. The computing platform of claim 11, wherein
said first sharing attribute and said second sharing attribute respectively represent a first sharing right and a second sharing right, said first sharing right and said second sharing right being chosen among a list comprising at least:
- no right to reshare;
- limited right to reshare;
- unlimited right to reshare.

13. The computing platform of claim 11 or 12, wherein said software module is able to assign an access right to said data stream, said access right being chosen among a list comprising at least:
- read only;
- read and write.

14. The computing platform of one of claims 11 to 13, wherein said data stream is composed of a plurality of individual pieces of data, wherein the first sharing attribute and second sharing attribute assigned to each said piece of data are identical.

15. The computing platform of one of claims 11 to 14, wherein said right assignment module is able to assign at a first moment a sharing attribute to a first sequence of individual pieces of data present in said data stream and is able to assign another different sharing attribute to a second sequence of individual pieces of data, which is present in said data stream at another moment different from the first moment.

16. The computing platform of one of the claims 11 to 15, wherein said data stream is produced by a cyberphysical system, such as for example a MES (manufacturing execution system), a IT-OT integrated operating system, a PLC (programmable logic controller), a system for Automation, a Database repository, a HMI (human machine interface), a SCADA (supervisory control and data acquisition), a DCS (distributed control system), an ERP (Enterprise Resource Planning)), a robot, a remote-controlled system, an automated machine and/or an IOT system.

17. The computing platform of one of the claims 11 to 16, wherein said software module is able to assign, to the piece of data of said data stream, a contribution attribute representative of the organisation(s) operating said computing platform if this (these) organisation(s) is (are) at the origin of the generation and/or of the modification of the piece of data.
